# EUROPEAN PATENT SPECIFICATION

(11) **EP 3 497 888 B1**
(45) Date of publication and mention of the grant of the patent: **11.08.2021**
(21) Application number: 17842875.1
(22) Date of filing: 21.08.2017
(51) Int. Cl.: H04W 76/15

(54) **DEVICE, METHOD AND PRODUCTS FOR MANAGING A COMMUNICATION INTERFACE OF A COMMUNICATION DEVICE**
VORRICHTUNG, VERFAHREN UND PRODUKTE ZUR VERWALTUNG EINER KOMMUNIKATIONSSCHNITTSTELLE EINER KOMMUNIKATIONSVORRICHTUNG
DISPOSITIF, PROCÉDÉ ET PRODUITS DE GESTION D'UNE INTERFACE DE COMMUNICATION D'UN DISPOSITIF DE COMMUNICATION

(30) Priority: 25.08.2016 US 201615246656
(43) Date of publication of application: 19.06.2019
(73) Proprietor: Huawei Technologies Co., Ltd., Longgang District Shenzhen, Guangdong 518129 (CN)
(72) Inventor: ZHANG, Tianhu, Richmond Hill, Ontario L4E 4J4 (CA); POELUEV, Yuri, Petersburg, Ontario N0B 2H0 (CA)
(74) Representative: Isarpatent
(86) International application number: PCT/CN2017/098293
(87) International publication number: WO 2018/036452

(56) References cited:
- CN-A- 104 506 404
- CN-A- 105 808 320
- US-A1- 2008 123 536
- US-A1- 2008 151 779
- US-A1- 2008 151 893
- US-A1- 2011 141 124
- GHANNAM ALJABARI ET AL: "Virtualization of wireless LAN infrastructures", INTELLIGENT DATA ACQUISITION AND ADVANCED COMPUTING SYSTEMS (IDAACS), 2011 IEEE 6TH INTERNATIONAL CONFERENCE ON, IEEE, 15 September 2011 (2011-09-15), pages 837-841, XP031990339, DOI: 10.1109/IDAACS.2011.6072889 ISBN: 978-1-4577-1426-9
- PEREZ S ET AL: "Virtualization of the Wireless Medium: A Simulation-Based Study", 2009 IEEE 69TH VEHICULAR TECHNOLOGY CONFERENCE; APRIL 26-29, 2009, BARCELONA, SPAIN, IEEE, PISCATAWAY, NJ, USA, 26 April 2009 (2009-04-26), pages 1-5, XP031474855, ISBN: 978-1-4244-2517-4

## Description

### FIELD

This disclosure relate to the field of communication devices, and more particularly to devices, methods and products for managing a communication interface.

### BACKGROUND

Communication devices such as mobile phones are increasingly used for multiple applications such as work activities, personal activities, or to access different external systems. For security, privacy, permissions or other reasons, containers can be created on the same device to isolate these applications.

It can be a challenge to manage device resources such as communication interfaces between different containers while maintaining isolation between the containers.

The following documents disclose some technological background of the present invention:
D1 US 2011/141124 A1 (HALLS DAVID [GB] ETAL) 16 June 2011 (2011-06-16) GHANNAM ALJABARI ET AL: "Virtualization of wireless LAN infrastructures", INTELLIGENT DATA ACQUISITION AND D2 ADVANCED COMPUTING SYSTEMS (IDAACS), 2011 IEEE 6TH INTERNATIONAL CONFERENCE ON, IEEE, 15 September 2011 (2011-09-15), pages 837-841, DOI: 10, 1109/ IDAACS.2011.6072889 ISBN: 978-1-4577-1426-9

Documents D1 and D2 contribute to the understanding of the invention since they disclose some technological descriptions of the known prior art in the technological field to which the invention relates, as indicated above.

### SUMMARY

In some situations, some aspects of the present disclosure may enable the management of an external connection with a physical communication interface across multiple containers operating on a single communication device.

The invention provides a method for managing a physical communication interface on a communication device as recited in claim 1, a related communication device as recited in claim 5 and related products as recited in claims 6 and 7. Advantageous embodiments are set out in the dependent claims. Aspects of the invention which contribute to the understanding of the invention are listed below.

In accordance with one aspect of the present disclosure, there is provided a communication device including a physical communication interface; and at least one processor. The at least one processor is configured to provide: a kernel configured for operating first and second containers on the communication device; first and second network nodes, the first network node providing a first virtual communication interface to the first container, and the second network node providing a second virtual communication interface to the second container; and a network controller configured to provide routing and a network connection between the first network node and the physical communication interface, and between the second network node and the physical communication interface; the first container configured to operate a first communication interface management unit for managing a connection to the first virtual communication interface, and the second container configured to concurrently operate a second communication interface management unit for managing a connection to the second virtual communication interface.

Optionally, in any of the previous aspects, the at least one processor is configured to block direct network communications between the first network node and the second network node.

Optionally, in any of the previous aspects, the first and the second communication interface management units concurrently manage access to the physical communication interface for the respective first and second containers via the respective first and second virtual communication interfaces.

Optionally, in any of the previous aspects, each of the first and the second communication interface management unit is configured to operate in a control mode in which the communication interface management unit controls a connection with the physical communication interface, or to operate in a monitor mode in which the communication interface management unit monitors the connection with the physical communication interface.

Optionally, in any of the previous aspects, the at least one processor is configured to provide a control management unit for managing the first and the second communication interface management units such that only one of the first and the second communication management unit is operating in the control mode.

Optionally, in any of the previous aspects, the control management unit identifies which of the first and the second communication interface management unit is to operate in the control mode based on communication interface profiles for the first and the second containers, and based on available external connections for the physical communication interface.

Optionally, in any of the previous aspects, when the first communication interface management unit is operating in the control mode, and a container focus switches from the first container to the second container, the first communication interface management unit continues to operate in the control mode.

Optionally, in any of the previous aspects, the communication interface manager is configured to manage a current connection to the physical communication interface when the communication interface management unit operating in the control mode is changed from the first communication interface management unit to the second communication interface management unit.

Optionally, in any of the previous aspects, the at least one processor is configured to intercept messages sent to the kernel from the first and the second communication interface management units.

Optionally, in any of the previous aspects, the network controller is configured to hide the first and the second network nodes from an external connection with the physical communication interface.

In accordance with another aspect of the present disclosure there is provided a method for managing a physical communication interface on a communication device. The method includes: operating a first communication interface management unit in a first container operating on the communication device, the first communication interface management unit managing a connection to a first virtual communication interface having a network connection with the physical communication interface; and concurrently with the operation of the first communication interface, operating a second communication interface management unit in a second container operating on the communication device, the second communication interface management unit managing a connection to a second virtual communication interface having a network connection with the physical communication interface.

Optionally, in any of the previous aspects, the method further includes: blocking direct network communications between the first virtual communication interface and the second virtual communication interface.

Optionally, in any of the previous aspects, the method further includes: configuring the each of the first and the second communication interface management unit to operate in: a control mode in which the communication interface management unit controls a connection with the physical communication interface, or a monitor mode in which the communication interface management unit monitors the connection with the physical communication interface.

Optionally, in any of the previous aspects, the method further includes: managing the first and the second communication interface management units such that only one of the first and the second communication management unit is operating in the control mode.

Optionally, in any of the previous aspects, the method further includes: identifying which of the first and the second communication interface management unit is to operate in the control mode based on communication interface profiles for the first and the second containers, and based on available external connections for the physical communication interface.

Optionally, in any of the previous aspects, the method further includes: when the first communication interface management unit is operating in the control mode, and a container focus switches from the first container to the second container, continues to operate the first communication interface management unit in the control mode.

Optionally, in any of the previous aspects, the method further includes: managing a current connection to the physical communication interface when the communication interface management unit operating in the control mode is changed from the first communication interface management unit to the second communication interface management unit.

Optionally, in any of the previous aspects, the method further includes: intercepting messages sent to the kernel from the first and the second communication interface management units.

Optionally, in any of the previous aspects, the method further includes: hiding the first and the second virtual communication interfaces from an external connection with the physical communication interface.

In accordance with another aspect of the present disclosure there is provided a non-transitory, computer-readable medium or media having stored thereon computer-readable instructions. The instructions, which when executed by at least one processor, configure the at least one processor to operate a first communication interface management unit in a first container operating on the communication device, the first communication interface management unit managing a connection to a first virtual communication interface having a network connection with the physical communication interface; and concurrently with the operation of the first communication interface, operate a second communication interface management unit in a second container operating on the communication device, the second communication interface management unit managing a connection to a second virtual communication interface having a network connection with the physical communication interface.

Many further features and combinations thereof concerning the present improvements will appear to those skilled in the art following a reading of the instant disclosure.

### DESCRIPTION OF THE FIGURES

FIG. 1 is a diagram showing an example operating system architecture for a communication device with multiple containers.
FIG. 2 is a diagram showing aspects of another example operating system architecture for a communication device with multiple containers.
FIG. 3 is a diagram showing data channel aspects of an example operating system architecture for a communication device.
FIG. 4 is a diagram showing control channel aspects of a first example operating system architecture for a communication device.
FIG. 5A is a diagram showing control channel aspects of a second example operating system architecture for a communication device.
FIG. 5B is a diagram showing an example mechanism for filtering messages.
FIG. 6 is a diagram showing aspects of an example communication device.
FIG. 7 is a flowchart showing aspects of an example method for managing a physical communication interface.
FIGS. 8A and 8B are diagrams showing example before and after states of a control channel when a change of container focus occurs, according to the invention.
FIGS. 9A and 9B are diagrams showing example before and after states of another control channel when a change of container focus occurs.
FIGS. 10A and 10B are diagrams showing example before and after states of a control channel when there is a change in available external connections.
FIGS. 11A and 11B are diagrams showing example before and after states of another control channel when there is a change in available external connections.

These drawings depict aspects of example embodiments for illustrative purposes. Variations, alternative configurations, alternative components and modifications may be made to these example embodiments.

### DETAILED DESCRIPTION

The use of virtualization or multiple containers operating on a communication device can, in some instances, help to isolate different applications, for example, separating work and personal activities, or limiting access to data, instructions or communication messages between different user profiles.

In some applications, the use of multiple containers on a single physical device can be applicable to bring-your-own-device programs within an enterprise to provide device flexibility to both employees and the enterprise while addressing privacy concerns for the user and meeting security requirements for the enterprise.

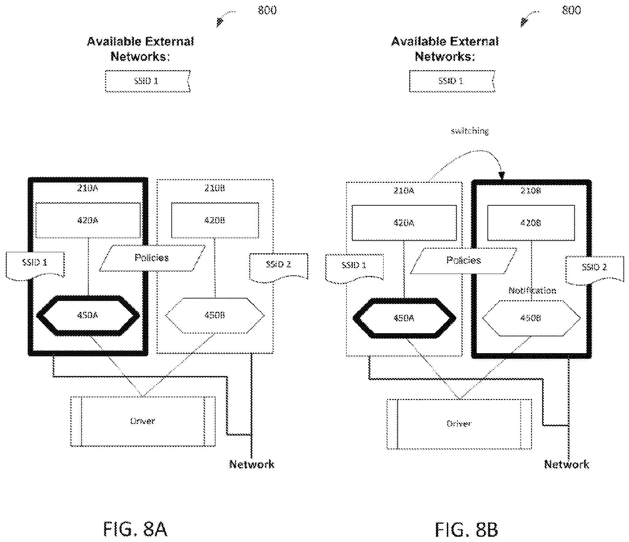

Although data and applications may be separated through the use of different containers (e.g. a first container for personal applications and data, and a second container for work applications and data), challenges may arise when resources such as communication interfaces are shared between the containers. The disclosure of fig. 8A and 8B describes the claimed invention, the remaining part of the description, though using the term "embodiment" does not describe part of the claimed invention.

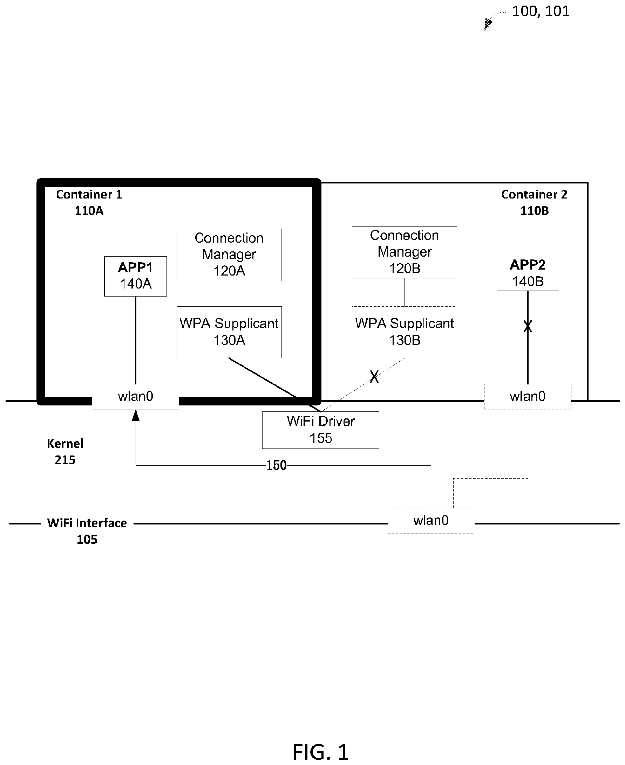

FIG. 1 shows an example operating system architecture 100 for a communication device 101. In this architecture 100, the communication device 101 is operating two separate containers 110A, 110B which may require access to a WiFi interface 105. Container 1 is currently in focus (as indicated by the bold outline) on the communication device 101. In some embodiments, a container is considered to be in focus when it is actively displayed on a display device. For example, a user interface showing aspects of a first container can include windows, desktops, pages, menus, command prompts, applications, etc. for the first container. In some examples, the user interface showing only aspects of the in-focus first container can fill the entire area of the display device.

In another embodiment, a user interface may show aspects of multiple containers. For example, windows corresponding to applications running on different containers may be displayed on different portions of the user interface. In some such examples, a first container may be in focus when at least one or its windows or other visual aspects of its application(s) are displayed more prominently than windows or other visual aspects of the second container's applications. For example, a first container's visual aspects may be displayed more prominently when they are appear to be on top or unobstructed (i.e., the entire window is visible), or when the visual aspects are displayed more boldly (e.g. window frame/title bar is bold, or is not greyed out/muted).

In another embodiment where a user interface may show aspects of both containers, a particular container may be considered to be in focus when any input received from an input device such as a keyboard or touchscreen will be applied to an application running in the particular container.

In this state, the wlan0 interface is moved 150 from the host WiFi interface 105 to Container 1, and the WPA (WiFi Protected Access) Supplicant (which may be referred to as "wpa_supplicant") 130A for Container 1 is running and controlling aspects of the WiFi driver 155. In other words, when in focus, Container 1 has a network connection with the WiFi Interface 105 and has control of the WiFi connection via its connection manager 120A and WPA Supplicant 130A.

In this state, Container 2, which is not in focus, does not have access to the wlan0 interface or the physical WiFi interface 105, and its WPA Supplicant 130B is terminated or inactive.

In the operating system architecture 100 illustrated in FIG. 1, the container not in focus does not have access to the network connection, and any applications which may be running in the container that is not in focus (e.g. APP2 140B) will not have access to the network. If the application receives updates from the network (e.g. a messaging application), the application will not receive updates while its container is not in focus.

When the focus switches from Container 1 to Container 2, Container 1 terminates or suspends its WPA Supplicant 130A, losing its WiFi connection. Container 2 starts its WPA Supplicant 130B and the wlan0 interface is moved from Container 1 to Container 2. When the focus is on Container 2, applications such as APP1 140A running in Container 1 will have no WiFi access.

Switching between containers in this manner involves the termination and starting of different WiFi processes, which requires processing time and power consumption. Also, during the switchover, there may be a period during which the WiFi interface may be unavailable while the appropriate supplicants and other related processes are initiated. During this period, the communication device 101 may not be connected to any WiFi network, and applications 140A, 140B will lose WiFi access.

For the architecture 100 illustrated in FIG. 1, in some instances, switching focus from a first container 110A to a second container 110B may cause the communication device 101 to connect to a different WiFi connection if the connection manager 120B of the second container has different permissions and/or WiFi profile data than the connection manager 120A of the first container. In other instances, switching focus from a first container 110A to a second container 110B may cause the communication device 101 to lose WiFi connectivity completely if the connection manager 120B of the second container does not have permissions and/or WiFi profile data for any available network.

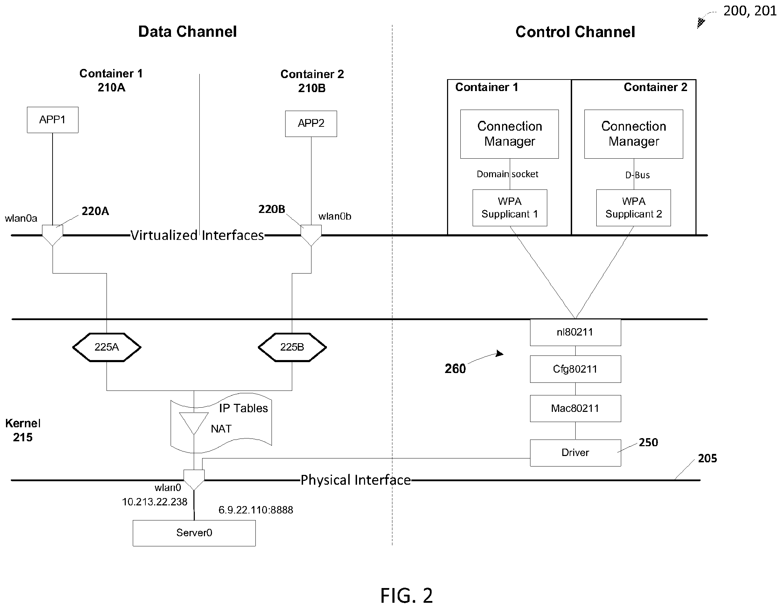

FIG. 2 shows aspects of an example operating system architecture 200 for a communication device 201. For illustrative purposes, the architecture 200 has been logically divided into a data channel and a control channel.

The communication device 201 includes one or more physical communication interfaces 205. In some embodiments, the physical communication interfaces 205 can include one or more wireless communication interfaces such as wireless local area network (WLAN) interfaces and/or mobile/cellular data network interfaces. Example interfaces include, but are not limited to, IEEE 802.11 (WiFi) interfaces, Bluetooth™, Global System for Mobile Communications (GSM), Code Division Multiple Access (CMDA), Long-Term Evolution (LTE), and the like.

A kernel 215 is configured to operate two or more containers on the communication device 201. Each container 210A, 210B has its own respective virtual communication interface 220A, 220B which connects to the physical communication interface 205 via a respective communication node 225A, 225B. In some embodiments, these virtual communication interfaces 220A, 220B are managed irrespective of whether the corresponding container is in focus or not.

Although the examples illustrated herein show two containers operating on the device 201, in other embodiments, three, four, five, or any other number of containers can be operating on the device 201.

In some embodiments, a container can be an operating system container such as a Google Android™ operating system. In some embodiments, a container can be a mobile operating system or a virtual phone.

In some embodiments, a container can be associated with one or more profiles. In one example, a container can be associated with a personal profile for personal applications, permissions and/or data. In another example, a container can be associated with an enterprise or work profile for enterprise/work applications, permissions and/or data. Any other profile or set of applications, permissions and/or data can be associated with a container.

In some embodiments, two or more containers can be operating on the device such that applications on each container can communicate over, or otherwise have access to, the physical interface concurrently.

In some embodiments, the data channel can be concurrently accessed by any number of containers on the device 201. A network node 225A, 225B is created for each container having access to the physical interface of the data channel. In some embodiments, the network nodes 225A, 225B can be network bridges. In some embodiments, the network nodes 225A, 225B can be any virtual or physical network device which creates a separate sub-network for its respective container.

In some instances, each network node provides a dedicated communication interface (e.g. WLAN interface) 220A, 220B for its corresponding container. The network nodes can be created and/or managed by the kernel, for example through the use of a software bridge.

The control channel of the architecture 200 governs which container is currently in full control of the physical interface. In some embodiments, the other containers not in full control can receive and/or request information from the physical interface. The control channel can include a driver 250 for the physical interface and interface subsystems 260.

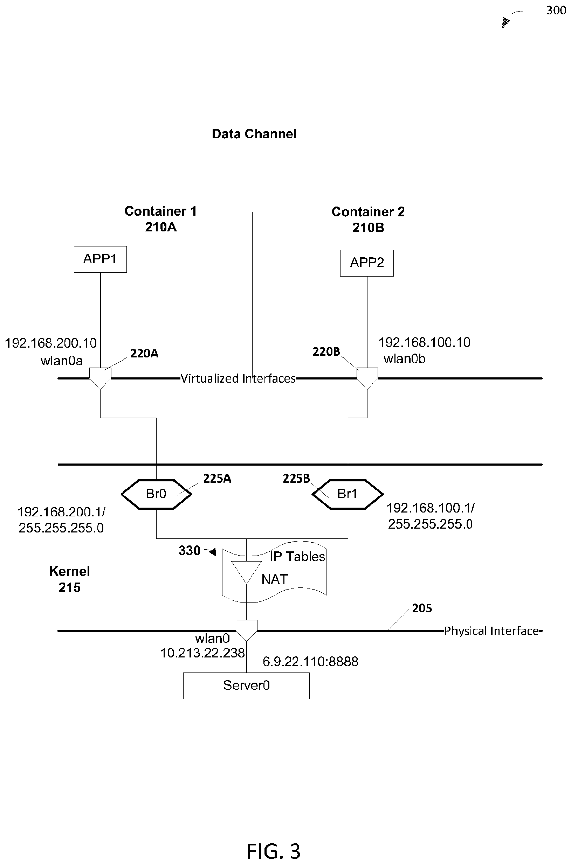

FIG. 3 shows aspects of an example operating system architecture for a communication device which can, in some situations, represent a data channel 300 for a wireless local area network interface 205. In this example, network bridge Br0 is attached to Container 1 and provides a corresponding sub-network 192.168.200.0. Similarly, network bridge Br1 is attached to Container 2 and provides a corresponding sub-network 192.168.100.0. The WiFi interface, wlan0, in the kernel is mapped to wlan0a in Container 1, and to wlan0b in Container 2.

In some embodiments, applications running in Container 1 (e.g. APP1) interact with the virtual interface wlan0a as if it were physical interface 205. Similarly, applications running in Container 2 (e.g. APP2) interact with the virtual interface for Container 2 wlan0b as if it were physical interface 205. In some embodiments, applications running in a container are unaware of the physical interface 205 or any network aspects outside their own network node.

In some embodiments, the operating system architecture 200 includes one or more network controllers 330. The network controller 330 is configured to provide routing and a network connection between the network nodes 225A, 225B and the physical communication interface 205. In some embodiments, the network controller 330 is configured to provide internet protocol (IP) forwarding and/or network address transaction (NAT) functionality. The network controller 330 may store, manage and/or otherwise have access to IP and/or other routing tables to route packets between the external interface and the virtual interfaces.

In some embodiments, the network controller 330 is configured to isolate the internal network 192.168.0.0 from the external network. In some situations, the internal network and/or the different containers will not be visible to the external network. In some embodiments, the network controller 330 can include a firewall or other component(s) to prevent attacks on the containers from outside the device 201. In some instances, this may provide greater security than the architecture 100 in FIG. 1 in which the wlan0 interface is moved from the host WiFi interface to the container.

In some embodiments, the network controller 330 is configured to disable communication between containers. In some instances, the isolation of the different internal networks may provide security and/or privacy between different containers. In some embodiments, a routing table used by the network controller includes entries or is otherwise configured to disable communication between containers. In some embodiments, an application running in a container is unaware of the physical interface sharing and/or of the container and network isolation mechanisms outside its container.

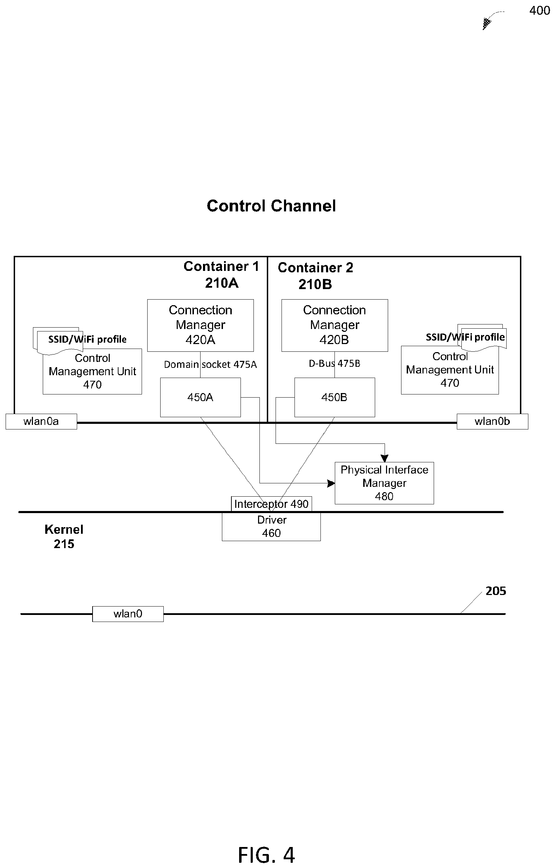

FIG. 4 shows aspects of an example operating system architecture for a communication device which can, in some situations, represent a control channel 400 for a wireless local area network interface 205.

Each container 210A, 210B has its own interface authentication unit 450A, 450B for authenticating access to an external connection over the physical communication interface 205. In some embodiments, the interface management unit 450A, 450B can be a supplicant such as a WPA Supplicant which may be used for WiFi authentication. In some embodiments, the interface management unit 450A, 450B can be another supplicant or other management unit used to authenticate access to a Bluetooth™ connection, a GSM or CDMA connection, or the like. In some embodiments, the interface management units 450A, 450B can operate as daemons.

In some embodiments, each container 210A, 210B has a separate namespace, such as a Linux namespace, which is separate from a host or parent namespace for the device 201. In some examples, these namespaces may include a communication interface namespace or network namespace.

Each interface management unit 450A, 450B can concurrently manage its connection with the physical interface 205 via the interface management unit's respective virtual interface (e.g. wlan0a, wlan0b). In some embodiments, each interface management unit 450A, 450B interacts with or otherwise utilizes one or more drivers 460, firmware or other device or process to interact with the physical interface 205.

In some embodiments, an interface management unit 450A, 450B is configured to operate in a control mode or a monitor mode. In the control mode, an interface management unit 450A, 450B is configured to have full control of the physical communication interface 205. In some examples, an interface management unit operating in a control mode can query information about the physical interface and/or to configure or otherwise control the operation of the physical interface. For example, in some instances, an interface management unit operating in a control mode can send "set", "get" and/or "configure" commands to the physical interface device 205.

In some embodiments, the interface management unit operating in the control mode can set permissions or otherwise control whether other interface management units operating in the monitor mode and/or operating on a container not in focus can connect to the physical interface. In some instances, the interface management unit operating in the control mode can block or otherwise prevent other interface management units from accessing the physical interface.

In the monitor mode, an interface management unit 450A, 450B is configured to monitor the physical communication interface 205. In some examples, an interface management unit operating in a monitor mode can query information about the physical interface but cannot configure or otherwise control the operation of the physical interface. For example, in some instances, an interface management unit operating in a monitor mode can send "get" and/or "query" commands to the physical interface device 205.

Unless explicitly blocked by the interface management unit operating in the control mode, interface management units operating in the monitor mode can be configured to manage a connection between the physical interface and the corresponding virtual communication interface.

In some embodiments, an interface management unit 450A, 450B may be aware of the virtual environment and may be configured not to conflict with another interface management unit. In some embodiments, an interface management unit 450A, 450B may know which interface management unit operating on the device is currently operating in the control mode.

In some embodiments, the interface management units 450A, 450B can be configured to operate in a control mode or a monitor mode based on policy data and/or instructions from a control management unit 470. In some embodiments, the control management unit 470 is configured to provide policy data and/or instructions to ensure that only one container's interface management unit is operating in a control mode, and the interface management units for all other containers are operating in a monitor mode.

In some embodiments, the control management unit 470 can be a system process or other application operating on the device that is configured to provide data and/or instructions as to whether a container's interface management unit is operating in a control mode or a monitor mode. In some embodiments, the control management unit 470 is configured to determine the appropriate mode for a container based on a number of factors. In some examples, these factors can include: available interface connections (e.g. available WiFi networks), an interface currently connected to the physical interface (e.g. a WiFi network to which the device is currently connected), a current container in focus, a container to which the focus is to be shifted, connection profiles/authorized connections of the container in focus (e.g. the container's stored WiFi profiles), connection profiles/authorized connections of the container to be put into focus, connection characteristics (e.g. signal strength, encryption modes, etc.), and/or any other relevant factor.

In some embodiments, the control management unit 470 can have access to and/or manage connection profiles and/or authorized connections for a container. For example, for a WiFi interface, connection profiles can include WiFi profile information such as a WiFi service set identifiers (SSID) and credentials or other login information. Authorized connections can include, for example, whitelists or blacklists of SSIDs which a contained is permitted or restricted from accessing. In some embodiments, connection profiles and/or authorized connection data can be stored on a storage device for access by one or more applications of the container.

In some embodiments, the control management unit 470 can be a set of policies and/or data which is accessed, referenced or otherwise utilized by an interface management unit 450A, 450B. For example, the control management unit 407 can be a set of data and/or instructions stored on a storage device for access by the interface management unit 450A, 450B of a container.

In some embodiments, the control management unit 470 may be part of an interface management unit 450A, 450B. For example, the control management unit 470 may be a subroutine or other process, and/or a set of instructions and/or data, which is logically or structurally part of the interface management unit 450A, 450B.

In some embodiments, the control management unit 470 and/or its associated functions can be provided by the physical interface manager 480.

In some embodiments, control management unit policies, instructions, and/or data may be common between different containers. For example, in some embodiments, policies implemented based on instructions and/or data from a control management unit may be common across all containers to ensure that only one container is operating in a control mode at a time.

In some embodiments, one or more containers may include a connection manager 420A, 420B. A connection manager can, in some instances, be an application or process which provides a user interface for configuring interface connection services. For example, in some embodiments involving a WiFi physical interface, a connection manager can provide an interface to receive inputs for selecting an available WiFi SSID, entering WiFi connection credentials, updating WiFi profile information, displaying available networks, displaying connection signal strength, etc.

In some embodiments, interface management units 450A, 450B are compatible with multiple operating system connection managers. In some embodiments, interface management units 450A, 450B modified to handle different operating systems but are still coordinated in their control/monitor modes of operation by the control management unit(s).

In some embodiments, the interface management units 450A, 450B communicate with their respective connection managers 420A, 420B and/or other units using different inter-process communications. For example, in some embodiments, interface management units 450A can communication via domain sockets 475A. In some embodiments, interface management units 450B can communicate via D-Bus communication mechanisms 475B. In some embodiments, the communication mechanism between a connection manager 420A, 420B and its corresponding interface management unit 450A, 450B can be container operating system-specific or implementation-specific. In some embodiments, the interface management units can be configured to support any type of top layer protocol such as wpa_ctl or D-Bus. In some embodiments, a connection manager 420A, 420B can select any compatible top layer protocol.

In some embodiments, the control channel 400 includes a physical interface manager 480. The physical interface manager can, in some embodiments, be instructed to scan which connections (e.g. WiFi networks) are available via the physical interface 205, to associate or otherwise connect to a particular connection, and/or to authenticate with the particular connection. In some embodiments, the physical interface manager 480 communicates with the interface management units 450A, 450B to receive instructions and/or communicate statuses, available connections, etc.

In some embodiments, the physical interface manager is configured to operate at a host level (e.g. in a host namespace). In some embodiments, the architecture includes an interceptor mechanism 490 for filtering, intercepting or otherwise controlling the messages sent to the kernel 215 from the interface management units 450A, 450B.

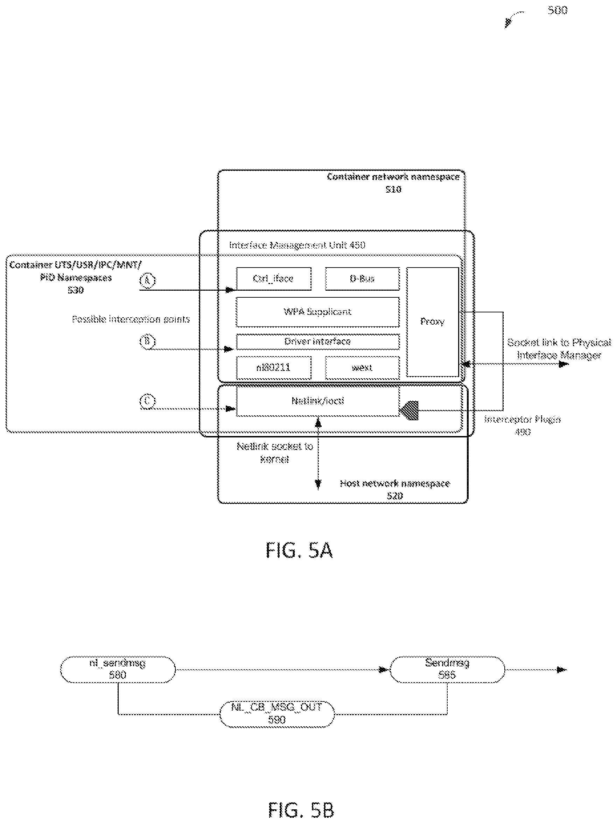

FIG. 5A shows a schematic showing aspects of an example namespace architecture 500 for a control channel for a WiFi physical interface. As illustrated, in some embodiments, aspects of an interface management unit 450 can be positioned within a container network namespace 510, a host network namespace 520, and a container UNIX Time Sharing (UTS)/Unix System Resources (USR)/Interprocess Communication (IPC)/mount (MNT)/Process ID (PID) namespace 530. In other embodiments, as suitable, any number of namespaces and/or architectures may be used including others which may not be explicitly mentioned herein.

References A, B and C show example points in the processes at which messages sent to the kernel 215 from the interface management units 450 can be intercepted.

FIG. 5B shows an example mechanism for filtering messages at C in FIG. 5A. In this example embodiment, a Netlink libnl library is used to silently intercept netlink messages before they are sent through the socket to the kernel 215. Before the message is sent 585, the libnl library call nl_sendmsg 580 passes the message to NL_CB_MSG_OUT 590. NL_CB_MSG_OUT 590 is a callback function configured to inspect the message, modify the message, discard the message, and/or return an error code.

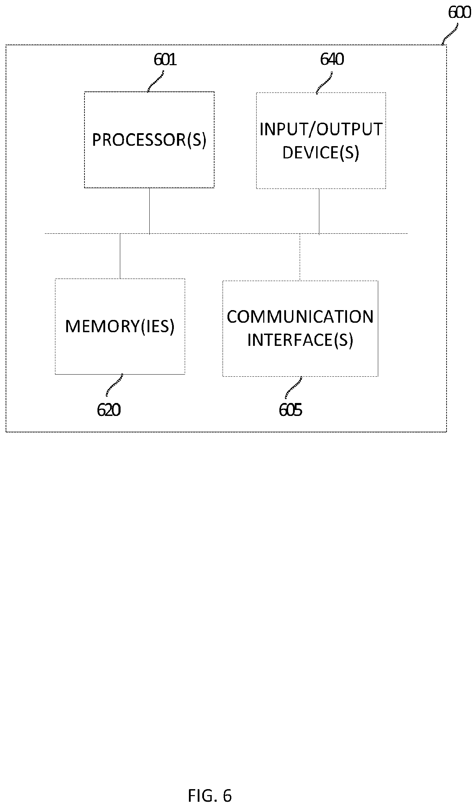

FIG. 6 shows a schematic diagram showing aspects of an example communication device 600. In some embodiments, the communication device 600 may include one or more processors 601, memory devices 620, communication interfaces 205, input and/or output devices 640, and/or any other components or mechanisms suitable for or involved in performing aspects of the methods and functions described herein.

In some embodiments, an example communication device 600 may be a mobile device such as a smartphone, tablet computer, laptop, wearable device or other computing device.

Each processor 601 may be, for example, any type of general-purpose microprocessor or microcontroller, a central or graphics processing unit, a digital signal processing (DSP) processor, an integrated circuit, a field programmable gate array (FPGA), a reconfigurable processor, or any combination thereof.

Memory or storage devices 620 may include one or a combination of any type of computer memory that is located either internally or externally, for example, hard drives, flash memory, solid state memory, network storage devices, random-access memory (RAM), cache memory, read-only memory (ROM), electro-optical memory, magneto-optical memory, erasable programmable read-only memory (EPROM), and electrically-erasable programmable read-only memory (EEPROM), Ferroelectric RAM (FRAM), non-transitory computer readable media or the like.

In some examples, memory or storage devices 620 may include data or instruction sets for configuring the one or more processors to implement, control and/or instruct a kernel, containers, interface management units, control management units, physical interface managers, connection managers, network nodes, network controllers and any other suitable application or process. Although there may be a distinction between processes and applications operating at a kernel level and those operating at a container level, all such processes and applications at both levels can be interpreted as being provided through the operations of the processor(s) 601. The memory devices 620 may also include instructions or code for configuring one or more processors and other components of the communication device 600 to perform any of the methods and functions described herein.

In some embodiments, the communication device 600 may include input or output devices 640 such as keyboard, mouse, camera, touch screen, microphone, displays, or other integrated, peripheral or linked input or output device. The input devices may be configured to receive instructions to select or change connection profile information. The output devices may be configured to display or otherwise communicate connection information, etc.

In some examples, the communication device 600 includes one or more physical communication interfaces 205. In some embodiments, the physical communication interfaces can include radios, antennae, circuits, and any other hardware, device or module for providing an aspect of a communication interface. In some embodiments, the one or more communication interfaces 205 can be configured to communications using IEEE 802.11 (WiFi), Bluetooth™, Global System for Mobile Communications (GSM), Code Division Multiple Access (CDMA), Long-Term Evolution (LTE), and/or the like.

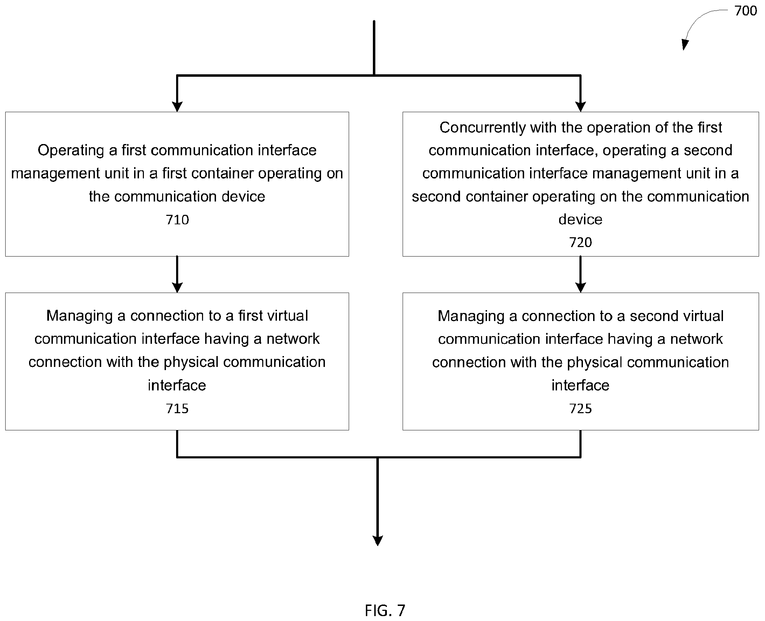

FIG. 7 is a flowchart showing aspects of an example method 700 for managing a physical communication interface on a communication device 500.

At 710, processor(s) of the communication device 500 operate a first communication interface management unit in a first container operating on the communication device 500. In some embodiments, the first communication interface management unit manages 715 a connection to a first virtual communication interface having a network connection with the physical communication interface. In some instances, the first virtual communication interface is provided by a first network node positioned between the first container and the physical communication interface.

At 720, the processor(s) of the communication device 500 operate a second communication interface management unit in a second container operating on the communication device 500. In some embodiments, the second communication interface management unit manages 725 a connection to a second virtual communication interface having a network connection with the physical communication interface. In some instances, the second virtual communication interface is provided by a second network node positioned between the second container and the physical communication interface.

In some embodiments, the processors similarly operate any number of communication interface management units for a corresponding number of containers operating on the communication device.

In some embodiments, the second communication interface management unit operates concurrently with the operation of the first communication interface. In some instances, the concurrent operation provides both containers with access to the physical communication interface.

In some embodiments, the processor(s) block direct network communications between the first communication interface and the second communication interface. In some embodiments, the processors hide the virtual communication interfaces from an external connection with the physical communication interface. In some embodiments, the processors block direct network communications between virtual communication interfaces and/or hide the virtual communication interfaces with a networking controller.

As described herein or otherwise, in some embodiments, the processors configure each of the communication interface management units to operate in a control mode or a monitor mode. In some embodiments, the processors configure the communication interface management units such that only one of the communication interface management units operate in a control mode at a time.

As described herein or otherwise, in some embodiments, the processors identify which communication interface management unit is to operate in the control mode based on communication interface profiles for the containers, and based on available external connections for the physical communication interface.

FIGS. 8A and 8B illustrate before and after states for a control channel for an example architecture 800 operating two containers 210A, 210B when a focus shifts from the first container 210A to the second container 210B, according to the invention. In both states, WiFi network SSID 1 is available.

In the before state in FIG. 8A, the first container 210A is in focus (indicated by the bold outline), and the communication interface management unit 450A in the first container is operating in a control mode (also indicated by a bold outline). Referring again to FIG. 8A, the first container 210A has a profile for authenticating/authorizing access to SSID 1, and the first communication interface management unit 450A is in a control mode and connects to the SSID 1 network.

When a change of focus to the second container 210B is triggered as illustrated in FIG. 8B, the control management unit(s) are used to check and compare the WiFi profiles of the containers and any policies. Because the profiles of the second container 210B permit access to SSID 2 but not SSID 1, the device processor(s) keep the first communication interface management unit 450A operating in a control mode, and the second communication interface management unit 450B operates in a monitor mode and can, in some embodiments, provide a notification of such to the second container's connection manager 420B.

In the invention, this assignment of modes may permit the second container 210B which is now in focus to have network communications even though its profile information does not have the credentials for access the network. In some instances, this may improve usability by not disconnecting the communication device from the network simply because of a change of container focus. In some instances, this behavior is overridden by policy data which may prevent the first container from sharing its SSID profile, or policy data which may prevent the second container from accessing a SSID of another profile. Other variations and considerations are possible.

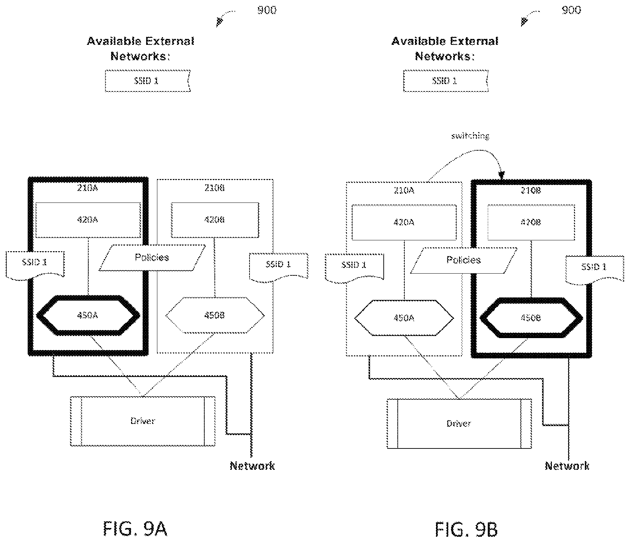

FIGS. 9A and 9B illustrate before and after states for a control channel for an example architecture 900 operating two containers 210A, 210B when a focus shifts from the first container 210A to the second container 210B. In both states, WiFi network SSID 1 is available. When a change of focus to the second container 210B is triggered as illustrated in FIG. 9B, the control management unit(s) are used to check and compare the WiFi profiles of the containers and any policies.

Because the profiles of the second container 210B also has access to SSID 1, the device processor(s) configured the second communication interface management unit 450B to operate in the control mode, and the first communication interface management unit 450A to operating in the monitor mode. Because the driver and physical interface is already connected to SSID 1, there is no interruption of the network connection when control is shifted from one container to another.

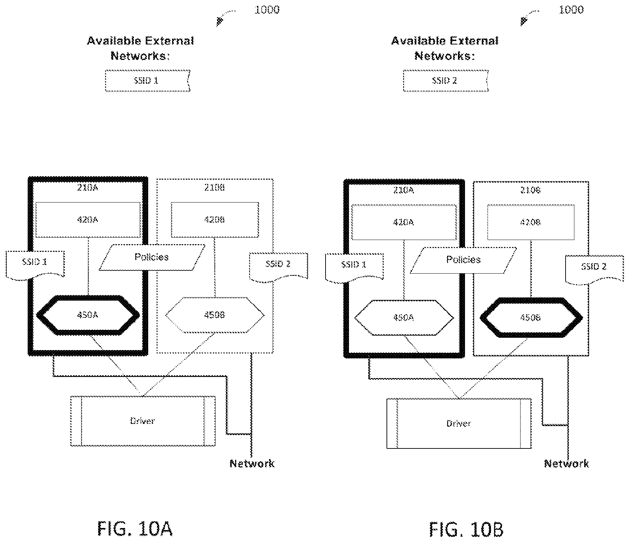

FIGS. 10A and 10B illustrate before and after states for a control channel for an example architecture 1000 operating two containers 210A, 210B when an available external connection changes. When a change in external network availability is detected, the processors check the policy data and WiFi profiles. Because the new and only available network connection is SSID 2 which matches a WiFi profile of the second container 210B, control is shifted to the second communication interface management unit 450B even though the focus continues to be on the first container 210A. In some instances, this may provide for network access even though no available network connections match any profiles for the first container 210A.

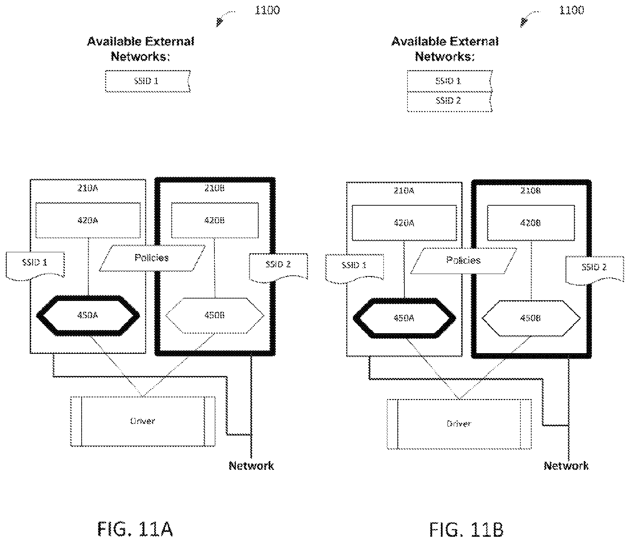

FIGS. 11A and 11B illustrate before and after states for a control channel for an example architecture 1100 operating two containers 210A, 210B when available external connections changes. When a change in external network availability is detected, the processors check the policy data and WiFi profiles. Even though a new network connection SSID 2 is available which may have a higher priority for the second container 210B, the processors may not shift control. In some instances, this may prevent the temporary loss of network connectivity that would be caused by disconnecting from SSID 1 and connecting to SSID 2 with the second communication interface management unit 450B. In some instances, this behavior may be overridden by policy data which may prioritize the second container's profiles when the second container is in focus despite any potential temporary loss of connection. Other variations and considerations are possible.

Embodiments disclosed herein may be implemented using hardware, software or some combination thereof. Based on such understandings, the technical solution may be embodied in the form of a software product. The software product may be stored in a non-volatile or non-transitory storage medium, which can be, for example, a compact disk read-only memory (CD-ROM), USB flash disk, a removable hard disk, flash memory, hard drive, or the like. The software product includes a number of instructions that enable a computing device (computer, server, mainframe, or network device) to execute the methods provided herein.

Program code may be applied to input data to perform the functions described herein and to generate output information. The output information is applied to one or more output devices. In some embodiments, the communication interface may be a network communication interface. In embodiments in which elements are combined, the communication interface may be a software communication interface, such as those for inter-process communication. In still other embodiments, there may be a combination of communication interfaces implemented as hardware, software, and/or combination thereof.

Each computer program may be stored on a storage media or a device (e.g., ROM, magnetic disk, optical disc), readable by a general or special purpose programmable computer, for configuring and operating the computer when the storage media or device is read by the computer to perform the procedures described herein. Embodiments of the system may also be considered to be implemented as a non-transitory computer-readable storage medium, configured with a computer program, where the storage medium so configured causes a computer to operate in a specific and predefined manner to perform the functions described herein.

Furthermore, the systems and methods of the described embodiments are capable of being distributed in a computer program product including a physical, non-transitory computer readable medium that bears computer usable instructions for one or more processors. The medium may be provided in various forms, including one or more diskettes, compact disks, tapes, chips, magnetic and electronic storage media, volatile memory, non-volatile memory and the like. Non-transitory computer-readable media may include all computer-readable media, with the exception being a transitory, propagating signal. The term non-transitory is not intended to exclude computer readable media such as primary memory, volatile memory, RAM and so on, where the data stored thereon may only be temporarily stored. The computer useable instructions may also be in various forms, including compiled and non-compiled code.

The present disclosure may make numerous references to servers, services, interfaces, portals, platforms, or other systems formed from hardware devices. It should be appreciated that the use of such terms is deemed to represent one or more devices having at least one processor configured to execute software instructions stored on a computer readable tangible, non-transitory medium. One should further appreciate the disclosed computer-based algorithms, processes, methods, or other types of instruction sets can be embodied as a computer program product comprising a non-transitory, tangible computer readable media storing the instructions that cause a processor to execute the disclosed steps.

Various example embodiments are described herein. Although each embodiment represents a single combination of inventive elements, the inventive subject matter is considered to include all possible combinations of the disclosed elements. Thus, if one embodiment comprises elements A, B, and C, and a second embodiment comprises elements B and D, then the inventive subject matter is also considered to include other remaining combinations of A, B, C, or D, even if not explicitly disclosed.

The embodiments described herein are implemented by physical computer hardware embodiments. The embodiments described herein provide useful physical machines and particularly configured computer hardware arrangements of computing devices, servers, processors, memory, networks, for example. The embodiments described herein, for example, are directed to computer apparatuses, and methods implemented by computers through the processing and transformation of electronic data signals.

The embodiments described herein may involve computing devices, servers, receivers, transmitters, processors, memory(ies), displays, networks particularly configured to implement various acts. The embodiments described herein are directed to electronic machines adapted for processing and transforming electromagnetic signals which represent various types of information. The embodiments described herein pervasively and integrally relate to machines and their uses; the embodiments described herein have no meaning or practical applicability outside their use with computer hardware, machines, a various hardware components.

Substituting the computing devices, servers, receivers, transmitters, processors, memory, display, networks particularly configured to implement various acts for non-physical hardware, using mental steps for example, may substantially affect the way the embodiments work.

Such hardware limitations are clearly essential elements of the embodiments described herein, and they cannot be omitted or substituted for mental means without having a material effect on the operation and structure of the embodiments described herein. The hardware is essential to the embodiments described herein and is not merely used to perform steps expeditiously and in an efficient manner.

Although the present invention and its advantages have been described in detail, it should be understood that various changes, substitutions and alterations can be made herein without departing from the invention as defined by the appended claims.

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method for managing a physical communication interface (205) on a communication device (201; 600), wherein the physical communication interface (205) includes a WiFi interface, the method comprising:
operating (710) a first communication interface management unit (450A) in a first container (210A) operating on the communication device, the first communication interface management unit (450A) managing a connection to a first virtual communication interface (220A) having a network connection with the physical communication interface (205);
concurrently with the operation of the first communication interface, operating (720) a second communication interface management unit (450B) in a second container (210B) operating on the communication device, the second communication interface management unit (450B) managing a connection to a second virtual communication interface (220B) having a network connection with the physical communication interface (205), wherein the first container (210B) and the second container (210B) are operating system containers that are separated from each other and share a kernel (215) of an operating system of the communication device (201; 600); **characterized in** configuring each of the first and the second communication interface management unit (450B) to operate in:
a control mode in which the communication interface management unit controls a connection with the physical communication interface (205), or
a monitor mode in which the communication interface management unit monitors the connection with the physical communication interface (205);
wherein, in the event that the first container (210A) is in focus and the first communication interface management unit (450A) is operating in the control mode and connects to a WiFi network (SSID 1), wherein profiles of the second container (210B) do not permit access to the WiFi network (SSID 1), then, after switching focus from the first container (210A) to the second container (210B), the first communication interface management unit (450A) keeps operating in the control mode, and the second communication interface management unit (450B) operates in the monitor mode.

2. The method of claim 1, comprising: blocking direct network communications between the first virtual communication interface (220A) and the second virtual communication interface (220B).

3. The method of any of claims 1 to 2, comprising: intercepting messages sent to the kernel from the first and the second communication interface management units (450B).

4. The method of any of claims 1 to 3, comprising: hiding the first and the second virtual communication interfaces (220B) from an external connection with the physical communication interface (205).

5. A communication device (201; 600) comprising at least one processor (602) configured to perform the method of any one of claims 1 to 4.

6. A computer-readable storage medium comprising computer-readable instructions which, when executed by at least one processor (602) of a communication device (201; 600) cause the communication device (201; 600) to perform the method of any one of claims 1 to 4.

7. A computer program comprising computer-readable instructions which, when executed by at least one processor (602) of a communication device (201; 600) cause the communication device to perform the method of any one of claims 1 to 4.

## Patentansprüche

1. Verfahren zum Verwalten einer physischen Kommunikationsschnittstelle (205) auf einer Kommunikationsvorrichtung (201; 600), wobei die physische Kommunikationsschnittstelle (205) eine Wi-Fi-Schnittstelle beinhaltet, wobei das Verfahren Folgendes umfasst:
Betreiben (710) einer ersten Kommunikationsschnittstellenverwaltungseinheit (450A) in einem ersten auf der Kommunikationsvorrichtung betriebenen Container (210A), wobei die erste Kommunikationsschnittstellenverwaltungseinheit (450A) eine Verbindung mit einer ersten virtuellen Kommunikationsschnittstelle (220A), die eine Netzwerkverbindung mit der physischen Kommunikationsschnittstelle (205) aufweist, verwaltet;
gleichzeitig mit dem Betrieb der ersten Kommunikationsschnittstelle, Betreiben (720) einer zweiten Kommunikationsschnittstellenverwaltungseinheit (450B) in einem zweiten auf der Kommunikationsvorrichtung betriebenen Container (210B),
wobei die zweite Kommunikationsschnittstellenverwaltungseinheit (450B) eine Verbindung mit einer zweiten virtuellen Kommunikationsschnittstelle (220B), die eine Netzwerkverbindung mit der physischen Kommunikationsschnittstelle (205) aufweist, verwaltet, wobei der erste Container (210B) und der zweite Container (210B) Betriebssystemcontainer sind, die voneinander getrennt sind und sich einen Kernel (215) eines Betriebssystems der Kommunikationsvorrichtung (201; 600) teilen; **gekennzeichnet durch**
dahingehendes Konfigurieren sowohl der ersten als auch der zweiten Kommunikationsschnittstellenverwaltungseinheit (450B), in Folgendem zu arbeiten:
einem Steuermodus, in dem die Kommunikationsschnittstellenverwaltungseinheit eine Verbindung mit der physischen Kommunikationsschnittstelle (205) steuert, oder
einem Überwachungsmodus, in dem die Kommunikationsschnittstellenverwaltungseinheit die Verbindung mit der physischen Kommunikationsschnittstelle (205) überwacht;
wobei, falls der erste Container (210A) im Fokus steht und die erste Kommunikationsschnittstellenverwaltungseinheit (450A) in dem Steuermodus arbeitet und eine Verbindung mit einem Wi-Fi-Netzwerk (SSID 1) herstellt, wobei Profile des zweiten Containers (210B) keinen Zugang zu dem Wi-Fi-Netzwerk (SSID 1) gestatten, die erste Kommunikationsschnittstellenverwaltungseinheit (450A) dann, nachdem der Fokus von dem ersten Container (210A) zu dem zweiten Container (210B) wechselt, das Arbeiten in dem Steuermodus fortsetzt und die zweite Kommunikationsschnittstellenverwaltungseinheit (450B) in dem Überwachungsmodus arbeitet.

2. Verfahren nach Anspruch 1, das Folgendes umfasst: Blockieren direkter Netzwerkkommunikationen zwischen der ersten virtuellen Kommunikationsschnittstelle (220A) und der zweiten virtuellen Kommunikationsschnittstelle (220B).

3. Verfahren nach einem der Ansprüche 1 bis 2, das Folgendes umfasst: Abfangen von Nachrichten, die von der ersten und der zweiten Kommunikationsschnittstellenverwaltungseinheit (450B) an den Kernel gesendet werden.

4. Verfahren nach einem der Ansprüche 1 bis 3, das Folgendes umfasst: Verbergen der ersten und der zweiten virtuellen Kommunikationsschnittstelle (220B) vor einer externen Verbindung mit der physischen Kommunikationsschnittstelle (205).

5. Kommunikationsvorrichtung (201; 600), die mindestens einen Prozessor (602) umfasst, ausgelegt zum Durchführen des Verfahrens nach einem der Ansprüche 1 bis 4.

6. Computerlesbares Speichermedium, das computerlesbare Anweisungen umfasst, die bei Ausführung durch mindestens einen Prozessor (602) einer Kommunikationsvorrichtung (201; 600) bewirken, dass die Kommunikationsvorrichtung (201; 600) das Verfahren nach einem der Ansprüche 1 bis 4 durchführt.

7. Computerprogramm, das computerlesbare Anweisungen umfasst, die bei Ausführung durch mindestens einen Prozessor (602) einer Kommunikationsvorrichtung (201; 600) bewirken, dass die Kommunikationsvorrichtung das Verfahren nach einem der Ansprüche 1 bis 4 durchführt.

## Revendications

1. Procédé de gestion d'une interface de communication physique (205) sur un dispositif de communication (201 ; 600), dans lequel l'interface de communication physique (205) comporte une interface Wi-Fi, le procédé comprenant :
l'exploitation (710) d'une première unité de gestion d'interface de communication (450A) dans un premier conteneur (210A) exécuté sur le dispositif de communication,
la première unité de gestion d'interface de communication (450A) gérant une connexion avec une première interface de communication virtuelle (220A) possédant une connexion de réseau avec l'interface de communication physique (205) ;
simultanément à l'exploitation de la première interface de communication,
l'exploitation (720) d'une seconde unité de gestion d'interface de communication (450B) dans un second conteneur (210B) exécuté sur le dispositif de communication, la seconde unité de gestion d'interface de communication (450B) gérant une connexion avec une seconde interface de communication virtuelle (220B) possédant une connexion de réseau avec l'interface de communication physique (205), le premier conteneur (210B) et le second conteneur (210B) étant des conteneurs de système d'exploitation qui sont séparés l'un de l'autre et partagent un noyau (215) d'un système d'exploitation du dispositif de communication (201 ; 600) ; **caractérisé par** la configuration de chacune des première et seconde unités de gestion d'interface de communication (450B) pour qu'elles fonctionnent dans :
un mode de commande dans lequel l'unité de gestion d'interface de communication commande une connexion avec l'interface de communication physique (205), ou
un mode de surveillance dans lequel l'unité de gestion d'interface de communication surveille la connexion avec l'interface de communication physique (205) ;
dans lequel, dans le cas où le premier conteneur (210A) est en évidence et la première unité de gestion d'interface de communication (450A) fonctionne dans le mode de commande et se connecte à un réseau Wi-Fi (SSID 1), dans lequel des profils du second conteneur (210B) ne permettent pas l'accès au réseau Wi-Fi (SSID 1), alors après le basculement de la concentration du premier conteneur (210A) sur le second conteneur (210B), la première unité de gestion d'interface de communication (450A) continue alors de fonctionner dans le mode de commande, et la seconde unité de gestion d'interface de communication (450B) fonctionne dans le mode de surveillance.

2. Procédé selon la revendication 1, comprenant : le blocage de communications de réseau directes entre la première interface de communication virtuelle (220A) et la seconde interface de communication virtuelle (220B).

3. Procédé selon l'une quelconque des revendications 1 et 2, comprenant : l'interception de messages envoyés au noyau depuis les première et seconde unités de gestion d'interface de communication (450B).

4. Procédé selon l'une quelconque des revendications 1 à 3, comprenant : le masquage des première et seconde interfaces de communication virtuelle (220B) vis-à-vis d'une connexion externe avec l'interface de communication physique (205).

5. Dispositif de communication (201 ; 600) comprenant au moins un processeur (602) configuré pour réaliser le procédé selon l'une quelconque des revendications 1 à 4.

6. Support de stockage lisible par ordinateur comprenant des instructions lisibles par ordinateur qui, à leur exécution par au moins un processeur (602) d'un dispositif de communication (201 ; 600) amènent le dispositif de communication (201 ; 600) à réaliser le procédé selon l'une quelconque des revendications 1 à 4.

7. Programme d'ordinateur comprenant des instructions lisibles par ordinateur qui, à leur exécution par au moins un processeur (602) d'un dispositif de communication (201 ; 600) amènent le dispositif de communication à réaliser le procédé selon l'une quelconque des revendications 1 à 4.
